(19) Europäisches Patentamt
European Patent Office
Office européen des brevets

(11) **EP 4 201 992 A1**

(12) **EUROPEAN PATENT APPLICATION**

(43) Date of publication:
**28.06.2023 Bulletin 2023/26**

(21) Application number: **22213615.2**

(22) Date of filing: **14.12.2022**

(51) International Patent Classification (IPC):
**C08K 9/02** *(2006.01)*     **C08K 9/04** *(2006.01)*
**C08L 23/06** *(2006.01)*     **C08L 51/00** *(2006.01)*
**C08L 51/06** *(2006.01)*     **C08K 3/36** *(2006.01)*

(52) Cooperative Patent Classification (CPC):
(C-Sets available)
**C08K 9/02; C08K 9/04; C08L 23/06;** C08K 3/36

(Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **22.12.2021 US 202117559796**

(71) Applicants:
• **Chung Yuan Christian University**
**Taoyuan City, 320 (TW)**

• **BERKM Inc.**
**Watertown, MA 02472 (US)**

(72) Inventor: **TSAI, Tsung-Yen**
**244 New Taipei City (TW)**

(74) Representative: **Lang, Christian**
**LangPatent Anwaltskanzlei IP Law Firm**
**Ingolstädter Straße 5**
**80807 München (DE)**

(54) **MODIFIED NANOCOMPOSITE MATERIAL**

(57)     A modified nanocomposite material is provided, which includes an inorganic filler, a silicon dioxide, and a polymer matrix, in which the silicon dioxide is binding with a hydroxyl bond of the inorganic filler to form a silicon dioxide-inorganic filler, and the polymer matrix is dispersed over the silicon dioxide-inorganic filler. Another modified nanocomposite material is further provided, which includes an inorganic filler, a silicon dioxide, and a polymer matrix, in which the silicon dioxide is binding with a hydroxyl bond of the inorganic filler to form a silicon dioxide-inorganic filler, the organic modifier is associated with the silicon dioxide-inorganic filler and the polymer matrix is dispersed over the silicon dioxide-inorganic filler and the organic modifier.

Fig. 1

EP 4 201 992 A1

Processed by Luminess, 75001 PARIS (FR)

**(Cont. next page)**

(52) Cooperative Patent Classification (CPC): (Cont.)

C-Sets
**C08K 9/02, C08L 23/06;**
**C08K 9/04, C08L 23/06;**
**C08L 23/06, C08L 51/06, C08K 9/02**

**Description**

**FIELD OF THE INVENTION**

The present invention relates to technology of composite materials, and more particularly to a modified nanocomposite material.

**BACKGROUND OF THE INVENTION**

The challenge to form high performance clays or layered-liked filler composites lies in the filler exfoliation and/or intercalation and uniform dispersion of clay nanofillers in the composite. Nanoparticles have been explored as fillers in polymers to improve various properties such as mechanical, thermal, electrical, and barrier properties. The driving force for the use of nanofillers is the enormous specific surface area that can be achieved as the size of the fillers reduces to less than 100 nm. Nanoparticles possess orders of magnitude higher specific surface area than their micron and macro sized counterparts. This can lead to two relevant phenomena. First, there is an increased area of interaction between the filler and the matrix. Secondly, there is a region surrounding each particle in which the polymer behaves differently from the bulk. The volume fraction of this "interaction zone (IZ)" can be larger than the volume fraction of particles and the properties of the IZ contribute to the change in properties. The increased interaction can have a variety of effects so nanoparticle incorporation into a polymer matrix is challenging. Nanoparticles tend to agglomerate with neighboring nanoparticles, especially at high loadings (>10 volume percent (vol %)). This agglomeration can limit many material properties.

Clays are typically formed of layered sheets disposed adjacent to each other due to strong ionic interactions between the sheets. This renders it difficult to exfoliate and/or intercalate the layered-liked clay filler. Even if the clay sheets are successfully separated when dispersed in a solvent or medium to form a suspension, the sheets tend to re-agglomerate and/or restack, for example, after the solvent or medium is removed. Moreover, each of the sheets tends to be a flat plate of a single charge type without any active position to interact with the polymer matrix which the clay fillers may be dispersed in.

To address the above, conventional methods to enhance the filler dispersion include (1) to introduce functional groups on both the filler and the matrix, or (2) to add compatibilizers for physical and/or chemical interaction between the resin and filler. The physical interaction, however, is often too weak to transfer load efficiently from the matrix to the filler while the chemical interaction tends to result in stiffness, which reduces the fracture toughness of the interphase between the matrix and filler, and in turn causes material cracking. Re-agglomeration of clay before used is a major concern.

There is thus a need to provide for a solution that ameliorates one or more of the issues as mentioned above. The solution should at least provide for an exfoliated or intercalated filler material that can be used in enhancing the mechanical and/or thermal properties of the composite.

**SUMMARY OF THE INVENTION**

According to above problems of the prior art, one object of the present invention is to provide a modified nanocomposite material which did not contain heavy metal(s) or halogen element(s) therein to prevent the environment pollution, so the recycling of the modified nanocomposite material will not harm to the environment, so as to solve the problem of the current technology uses nanocomposite contain metals that cannot be recycled or are difficult to recycle.

It is an object of the present invention is to provide an organic modifier to increase the compatibility of the inorganic filler and the polymer matrix within the modified nanocomposite material, and to improve the dispersion of the inorganic filler in polymer matrix.

It is another object of the present invention is to provide a modified nanocomposite material have good barrier properties, UV resistance, and flam resistance, so the application of the modified nanocomposite material can apply for food packaging materials, functional fibers, optical film, weather-resistance building materials, engineering plastics and regenerating applications including the above applications.

According to above objects, the present invention provides a modified nanocomposite material, which includes an inorganic filler, a silicon dioxide, and a polymer matrix, in which the silicon dioxide is binding with a hydroxyl bond of the inorganic filler to form a silicon dioxide-inorganic filler, and the polymer matrix is provided for dispersing over and encapsulating the silicon dioxide-inorganic filler.

In addition, the present invention further provides a modified nanocomposite material, which includes an inorganic filler, a silicon dioxide, an organic modifier and a polymer matrix, in which the silicon dioxide is binding with a hydroxyl bond of the inorganic filler to form a silicon dioxide-inorganic filler, the organic modifier is associated with the silicon dioxide-inorganic filler and the polymer matrix is provided for dispersing over and encapsulating the silicon dioxide-inorganic filler and the organic modifier.

BRIEF DESCRIPTION OF THE DRAWINGS

Fig. 1 is a schematic diagram of showing the structure of modified nanocomposite material in one embodiment in accordance with the present invention;
Fig. 2 is a schematic diagram of showing the reaction mechanism of Zn-Al-LDH is randomly coated on the surface of the $SiO_2$ in accordance with the present invention;
Fig. 3 is a schematic diagram of showing the reaction mechanism of Mg-Al-LDH is randomly coated on the surface of the $SiO_2$ in accordance with the present invention; and
Fig. 4 is a schematic diagram of showing the structure of modified nanocomposite material in another embodiment in accordance with the present invention;

**DETAILED DESCRIPTION OF THE PREFERRED EMBODIMENT**

The following detailed description refers to the accompanying drawings that show, by way of illustration, specific details and embodiments in which the invention may be practiced. These embodiments are described in sufficient detail to enable those skilled in the art to practice the invention. Other embodiments may be utilized and changes may be made without departing from the scope of the invention. The various embodiments are not necessarily mutually exclusive, as some embodiments can be combined with one or more other embodiments to form new embodiments.

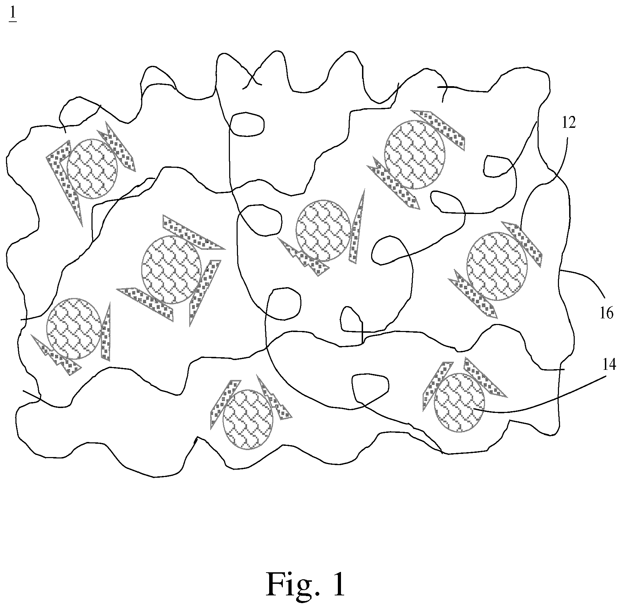

The present invention offers exfoliation and/or intercalation of the filler material added into the polymer matrix. Please refer to Fig. 1. Fig. 1 is a schematic diagram of showing the modified nanocomposite material in one embodiment of the present invention. As shown in Fig. 1, a modified nanocomposite material 1 at least includes a plurality of inorganic fillers 12, a plurality of silicon dioxides ($SiO_2$) 14, and a polymer matrix 16.

In some embodiment of this invention, the inorganic filler 12, the appropriate material of the inorganic filler 12 applied for this invention can be clay, particularly to natural clay, artificial inorganic layered materials, for example, smectite clay, vermiculite, halloysite, sericite, mica. Layered double hydroxides (LDH), or the combination of above. In some embodiments, smectite clay such as montmorillonite, saponite, beidellite, nontronite, or hectorite or the combination of above. For example, the layered inorganic materials is cation exchange type (i.e., an inorganic layered material having interlayer cation exchange capacity) having a cation exchange equivalent weight of between about 50meq/100g and 250meq/100g, Other layered inorganic materials having larger or smaller cation exchange equivalent of between about 250meq/100g and 500meq/100g or between about 10meq/100g and 50meq/100g. Take LDH as another example, the general formula of LDH can be described as for-mula (I):

$$\left[ M^{z+}{}_{1-x} M^{3+}{}_{x} (OH)_2 \right]^{\xi +} ( X^{n-} )_{\xi /n} \cdot m H_2 O$$

(formula I), wherein $M^{z+}$ and $M^{3+}$ are different metal ions, X is anion. When superscript z =1, metal ions can be $Li^+$ and $Al^{3+}$, while $\xi$ =2x-1; when superscript z=2, $M^{2+}$ can be $Ca^{2+}$, $Mg^{2+}$, $Zn^{2+}$, $Ni^{2+}$, $Mn^{2+}$, $Co^{2+}$ or $Fe^{2+}$; when z=3, $M^{3+}$ can be $Al^{3+}$, $Cr^{3+}$, $Mn^{3+}$, $Fe^{3+}$, $Ga^{3+}$, $Co^{3+}$ or $Ni^{3+}$. When $0.2 \leq x \leq 0.33$, the product is layered double hydroxide, if subscript x is not within above range then the product is metal hydroxide.

Expressly, LDH is formed by a stack by octahedrons which is composed of two or more metals with similar ionic radii coordinated with hydroxide ion. Because of the size of the metal ions, trivalent metal ions will replace one of the monovalent or divalent metal ions to cause the laminate to be positively charged, and in order to balance the charge, anions are inserted between the layers of the laminate, and the positive charge and anion of the laminate will generate coulomb attraction because of the displacement ability of different metal ions, the layered double hydroxides composed of different metal ions will have different anionic-exchange capacity (AEC).

Further, LDH is also called artificial clay, which can be formed by many synthesis methods, and synthesis conditions and environment can change according to different requirement to prepare unique LDH. The ions between the layers may exchange, so the modifier can insert into the layer by ion exchange to carry out a modification reaction to increase the functional groups on the laminate surface. In some embodiment of the invention, LDH can be Zn-Al-LDH or Mg-Al-LDH.

In some embodiments, silicon dioxide ($SiO_2$) 14 is used to bind with a hydroxyl bond of the inorganic filler 12, in which $SiO_2$ is formed by sol-gel method. Specifically, the sol-gel method undergoes two reactions: hydrolysis and condensation. Take TEOS (tetraethyl orthosilicate) as the precursor as an example, the compound with siloxyalkyl groups (Si-OR) will be hydrolyzed to produce silanol (Si-OH) groups when exposed to water, and the silanol groups will undergo condensation reaction with siloxyalkyl groups or silanol groups, and finally form silicon-oxide-silicon (Si-O-Si).

The polymer matrix 16 is used to disperse over the inorganic filler 12, and silicon dioxide 14, in which the kinds of polymer matrix 16 can be thermosetting macromolecule, thermoplastics polymer or the combination of above. In some embodiments of this invention, the polymer matrix 16 can be PE (polyethylene), PP (polypropylene), or PET (polyethylene terephthalate).

Based on the above, the present invention provides some examples to illustrate the modified nanocomposite material 1 of this invention.

Experimental 1

Synthesis of silicon dioxide ($SiO_2$)

Take weight of 2g-3g of water, the weight of 4g-5g of TEOS and the volume of 40ml-50ml of solvent to stir to form a first mixture, in which the solvent can be alcohol, such as ethanol, ethylene glycol, propanol, or isopropanol, the preferably is ethanol.

Next, take volume of 3ml-5ml of concentrated $NH_4OH$ (which is used as catalyst) to add into the first mixture and keep stirring for at least 24 hours to obtain a second mixture.

Then, the second mixture is then washed with deionized water and centrifuged until the smell of $NH_4OH$ disappeared, thereby, after the smell of $NH_4OH$ disappeared, the third mixture can be obtained. Then, the third mixture is pulverized to obtain white $SiO_2$ powder, in which the diameter of white $SiO_2$ powder ranges from 250nm-350nm.

Synthesis of Zn-Al-LDH (inorganic filler)

Take weight of 4g-5g of zinc nitrate hexahydrate ($Zn(NO_3)_2\cdot6H_2O$), the weight of 2g-3g of $Al(NO_3)_3\cdot9H_2O$ and the volume of 50ml-60ml of deionized water to mix and stir until the solution is present clear, and the clear solution is fourth mixture.

Next, take the weight of 1g-2g of NaOH, the weight of 1g-2g of $Na_2CO_3$ and the volume of 40ml-60ml deionized water to mix to obtain a fifth mixture.

Then, the fifth mixture is dropped into the fourth mixture until the pH value is 10, so a sixth mixture can be obtained.

Then, the sixth mixture is placed into a 250ml reactor under the temperature is 100°C for 12 hours to react to obtain a seventh mixture. Next, the seventh mixture is washed by deionized water and centrifuged until the pH value is neutral. The seventh mixture is then pulverized to obtain white Zn-Al-LDH powder, in which the diameter of white Zn-Al-LDH powder ranges from 280nm-370nm.

Synthesis of $SiO_2@$ Zn-Al-LDH (Silicon dioxide-inorganic filler)

The weight of 1g-2g of third mixture ($SiO_2$) powder is mixed with the volume of 70ml-80ml of solvent to form an eighth mixture, and is placed in a ultrasonic oscillator for shaking at least 30 minutes until the $SiO_2$ powder is dispersed in the eighth mixture.

The weight of 0.5g-2g of zinc nitrate hexahydrate ($Zn(NO_3)_2\cdot6H_2O$) and the weight of 0.4g-1g of Aluminum nitrate ($Al(NO_3)_3\cdot9H_2O$) are added into a volume of 30ml-40ml of deionized water to form a ninth mixture and stir until the ninth mixture is clear.

The weight of 1g-2g of NaOH and the weight of 0.5g-1g of $Na_2CO_3$ are added into the volume of 30ml-40ml of deionized water to form a tenth mixture and stir until the tenth mixture is clear.

The ninth mixture is taken to drop into eighth mixture to form an eleventh mixture, and tenth mixture is added into eleventh mixture until the pH value is 10.

Then, the eleventh mixture is placed into a volume of 250ml reactor under the temperature is 100°C for 12 hours to react to form a twelfth mixture. Next, the twelfth mixture is washed by deionized water and then is centrifuged until pH value is neutral. After twelfth mixture is washed and dried, the twelfth mixture is pulverized to obtain white $SiO_2@$Zn-Al-LDH powder.

Preparation of modified nanocompsite material

Take the polymer matrix 16 such as PE (polyethylene), PP (polypropylene), or PET (polyethylene terephthalate) to mix with above twelfth mixture, $SiO_2@$Zn-Al-LDH, and is performed hot press process with a hot press machine for lamination to form a thin film of a modified nanocomposite material 1 In this embodiment, the condition in the hot press process: temperature is 100°C and pressure is 100kgf/cm². In addition, in this embodiment of this invention, the preferably polymer matrix 16 is PP. It should be illustrated that the properties of PE, PP, or PET is hydrophobic and is non-polar material, $SiO_2$@Zn-Al-LDH is hydrophilic and polar nanomaterials. A compatibilizer (not shown) is used to bond the polymer matrix 16 and $SiO_2$@Zn-Al-LDH to form the modified nanocomposite material 1, in which the compatibilizer (not shown) can be PE-g-ST, PP-g-ST, ABS-g-MAH, PE-g-MAH or PP-g-MAHA. In a preferably embodiment, the compatibilizer is PP-g-MAHA which has grafting rate is 1%. In addition, the weight ratio of $SiO_2$ to Zn-Al-LDH ranges from 0~10:10~0 of $SiO_2$-inorganic filler (also can be showed as SiO2@inorganic filler). In this embodiment, the inorganic filler is Zn-Al-LDH, and $SiO_2$-inorganic filler can be described as $SiO_2$@Zn-Al-LDH. For example, when the content ranges from 0.5wt%-7wt% of $SiO_2$@Zn-Al-LDH in the modified nanocomposite material 100, the weight ratio of $SiO_2$ to Zn-Al-LDH can be 0:10, 1:9, 2:8... 10:0.

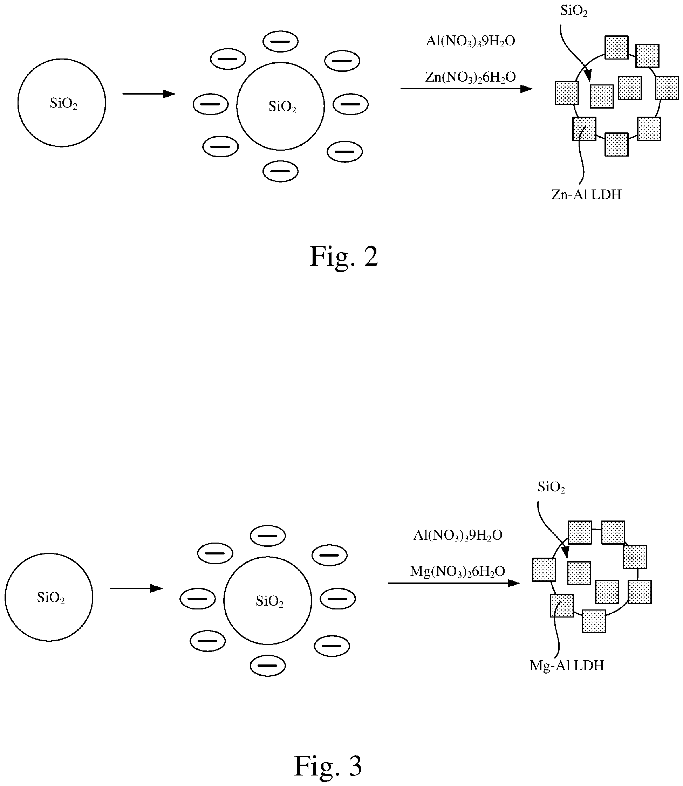

According to above, Zn-Al-LDH is randomly coated on the surface of the $SiO_2$ by using hydrothermal coprecipitation method to achieve the delamination, reaction mechanism is shown in Fig. 2.

Tensile test

In this invention, the thin film of modified nanocomposite material 1 is subjected to a tensile test by using ASTM D638, to obtain the tensile test ranges from 27MPa to 38MPa. That is, the thin film of modified nanocomposite material 1 is capable of material mechanical properties. In addition, the hydroxyl groups on the surface of $SiO_2$ 14 spheres, while Zn-Al-LDH is the presence of hydroxyl group in the laminate. The hydroxyl group can be combined with the compatibilizer to generate hydrogen bond to increase the dispersion.

Accordingly, $SiO_2$@Zn-Al-LDH is surface-functionalized by dispersing within the polymer matrix 16 to form the modified nanocomposite material 1 of this invention. The layered-liked structure of the $SiO_2$@Zn-Al-LDH is destroyed via dispersion of the polymer matrix 16, so the original structure of the inorganic filler 12 is destroyed. Advantageously, $SiO_2$@Zn-Al-LDH mixed with the polymer matrix 16 to enhance the mechanical and/or thermal properties of both thermoplastics and thermosetting polymers applicable in encapsulation for food packaging materials, functional fibers, optical film, weather-resistance building materials, engineering plastics.

Experimental 2

Synthesis of silicon dioxide ($SiO_2$)

Take weight of 2g-3g water, weight of 4g-5g of TEOS and the volume of 40ml-50ml of solvent to stir to form a first mixture, in which the solvent can be alcohol, such as ethanol, ethylene glycol, propanol, or isopropanol, the preferably is ethanol. Then, the volume of 7ml-8ml, 15M concentrated $NH_4OH$ is added into the first mixture and is kept stirring for 24 hours to obtain a second mixture. Next, the second mixture is washed with deionized water and centrifuged until the smell of $NH_4OH$ disappeared. After the smell of $NH_4OH$ disappeared, the third mixture can be obtained. The third mixture is freeze-dried and pulverized to obtain the white $SiO_2$ powder, in which the diameter of white $SiO_2$ powder ranges from 200nm-300nm.

Synthesis of Mg-Al-LDH (inorganic filler)

Take weight of 3g-4g of Magnesium nitrate ($Mg(NO_3)_2 \cdot 6H_2O$), weight of 2g-3g of Aluminum nitrate ($Al(NO_3)_3 \cdot 9H_2O$) and the volume of 20ml-30ml deionized water to mix and stir until the solution is present clear, in which the clear solution is fourth mixture.

Next, take weight of 2g-3g of NaOH and volume of 20ml-30ml of deionized water to mix to obtain a fifth mixture. Then, the fifth mixture is dropped into the fourth mixture to form a sixth mixture until the pH value is 13, so a sixth mixture can be obtained.

Then, the sixth mixture is placed into a 500ml reactor under temperature is 100 °C for 12 hours to obtain a seventh mixture. Next the seventh mixture is washed by deionized water and centrifuged until the pH value of seventh mixture is neutral. The seventh mixture is then pulverized to obtain white Mg-Al-LDH powder, in which the diameter of white Mg-Al-LDH powder ranges from 80nm-130nm.

Synthesis of $SiO_2$@Mg-Al-LDH (Silicon dioxide-inorganic filler)

Take weight of 0.2g-0.5g $SiO_2$ powder (third mixture) to add into volume of 30ml-50ml solvent to form an eighth mixture, and then is placed in an ultrasonic oscillator for 30-40 minutes for shaking, so as $SiO_2$ powder could dispersed over the eighth mixture.

Take weight of 1g-2g of $Al(NO_3)_3 \cdot 9H_2O$ and weight of 0.5g-1g of Magnesium nitrate hexahydrate ($Mg(NO_3)_2 \cdot 6H_2O$) to add into the volume of 20ml-30ml of deionized water to form a ninth mixture, and the ninth mixture is kept for stirring until there is no precipitate over the ninth mixture.

Next, the ninth mixture is added into eighth mixture to form tenth mixture which is kept for stirring for 5-10 minutes, and a concentrated Ammonium hydroxide aqueous ($NH_4OH$) is then added to adjust the pH value of tenth mixture is 10. Then, the tenth mixture is added into 500ml reactor under temperature is 100°C for 6 hours to obtain a twelfth mixture. Next, the twelfth mixture is washed by deionized water and centrifuged until the smell of $NH_4OH$ is disappeared in the twelfth mixture. After twelfth mixture is freeze-dried and pulverized to obtain the white $SiO_2$@Mg-Al-LDH powder, in which the diameter of white $SiO_2$@Mg-Al-LDH powder ranges from 350nm-400nm.

Preparation of modified nanocomposite material

Take the polymer matrix 16, such as PE, and the appropriate weight of twelfth mixture (white $SiO_2$@Mg-Al-LDH powder), and perform a hot press process with a hot press machine for lamination to form a thin film of a modified nanocomposite material. In this embodiment, the condition in the hot press process: temperature is 100°C and the pressure is 100 kgf/cm$^2$. Same as above Experimental 1, the properties of PE is hydrophobic and is non-polar material, $SiO_2$@Mg-Al-LDH powder is hydrophilic and polar nanomaterials. Accordingly, a compatibilizer (not shown) is used to bond the polymer matrix 16 and $SiO_2$@Mg-Al LDH powder to form the modified nanocomposite material. In this embodiment, the content of compatibilizer may range from 5%-15%, preferably is 10%, and the compatibilizer can be PE-g-MA (polyethylene grafted melated anhydride), which has grafted rate is 1%. In addition, the weight ratio of $SiO_2$ to inorganic filler 12 (Mg-Al-LDH) ranges from 0~10:10~0 of $SiO_2$-inorganic filler (can be showed as $SiO_2$@Mg-Al-LDH.) For example, when the content ranges from 0.5wt%-7wt% of $SiO_2$@Mg-Al-LDH in the modified nanocomposite material 100, the weight ratio of $SiO_2$ to Mg-Al-LDH can be 0:10, 1:9, 2:8... 10:0.

According to above, Mg-Al-LDH is randomly coated on the surface of the $SiO_2$ by using hydrothermal coprecipitation method to achieve the delamination, reaction mechanism is shown in Fig. 3.

Tensile test

As same as above Experimental 1, the thin film of modified nanocomposite material is subjected to a tensile test by using ASTM D638, to obtain the tensile test ranges from 17MPa to 22MPa. That is, the thin film of modified nanocomposite material is capable of material mechanical properties. In addition, the hydroxyl groups on the surface of $SiO_2$ 14 spheres, while Mg-Al-LDH is the presence of hydroxyl group in the laminate. The hydroxyl group can be combined with the compatibilizer to generate hydrogen bond to increase the dispersion.

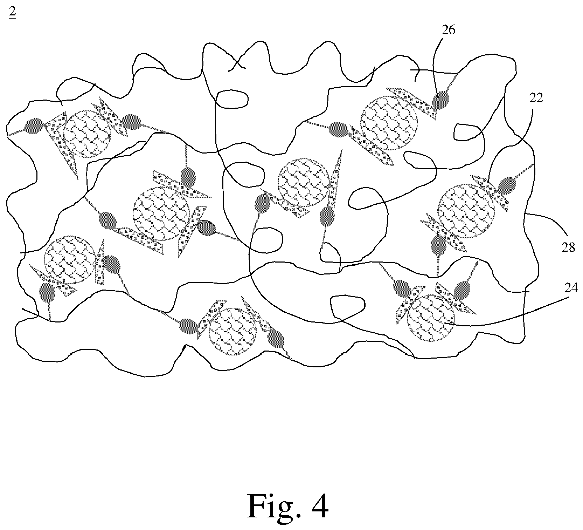

According to aforementioned embodiments, this invention further provides another modified nanocomposite material as shown in Fig. 4. Please refer to Fig. 4. Fig. 4 is a schematic diagram of showing the modified nanocomposite material in another embodiment of the present invention. As shown in Fig. 4, a modified nanocomposite material 2 at least includes a plurality of inorganic fillers 22, a plurality of silicon dioxides ($SiO_2$) 24, an organic modifier 26 and a polymer matrix 28. The different between the modified nanocomposite material 2 and above modified nanocomposite material 1 is the organic modifier 26. In this embodiment, the objective of the organic modifier 26 is associated with the inorganic filler 22 and is provided for performing ion exchange process to intercalate in the layered inorganic material.

The chemical formula of organic modifier 26 may include various atoms such as C (carbon), N (nitrogen), O (oxygen), and/or H (hydrogen), but no metal atoms. In addition, the organic modifier 26 may include conjugated double bonds compound, such as carbon-carbon double bonds (C=C), nitrogen-carbon double bonds (N=C), nitrogen-nitrogen double bonds (N=N), or carbon-oxygen double bonds (C=O), or the combination of above. In other embodiments, the organic modifier 26 may preferably include straight-chain alkane or ring structure, in which the number of carbon atoms of straight-chain alkane may be ranges from 12-18. Specifically, the organic modifier 26 can be sulfanilic acid sodium salt hydrate (SAS), amionpropyltriethyoxysilane (APS), or dimethyloctadecyl [3-(trimethoxysilyl)propyl]ammonium chloride.

It should be illustrated to that the materials, properties and/or function of the inorganic fillers 22, silicon dioxides ($SiO_2$) 24, and the polymer matrix 28 are the same as described as aforementioned. It is not to be described repeatedly herein.

Similarly, based on the above, the present invention provides some examples to illustrate the modified nanocomposite material 2 of this invention. It should be explained that the organic modifier 26 may be a factor to affect the properties of the modified nanocomposite material. Thus, in the following Experimental 3 and Experimental 4, except for adding organic modifier 26, the rest of the experimental conditions are the same as that of Experimental 1 and Experimental 2.

Experimental 3

Synthesis of silicon dioxide (SiO$_2$)

Take weight of 2g-3g of water, the weight of 4g-5g of TEOS and the volume of 40ml-50ml of solvent to stir to form a first mixture, in which the solvent can be alcohol, such as ethanol, ethylene glycol, propanol, or isopropanol, the preferably is ethanol.

Next, take volume of 3ml-5ml of concentrated NH$_4$OH (which is used as catalyst) to add into the first mixture and keep stirring for at least 24 hours to obtain a second mixture.

Then, the second mixture is then washed with deionized water and centrifuged until the smell of NH$_4$OH disappeared, thereby, after the smell of NH$_4$OH disappeared, the third mixture can be obtained. Then, the third mixture is pulverized to obtain white SiO$_2$ powder, in which the diameter of white SiO$_2$ powder ranges from 250nm-350nm.

Synthesis of Zn-Al-LDH (inorganic filler)

Take weight of 4g-5g of zinc nitrate hexahydrate (Zn(NO$_3$)$_2$•6H$_2$O), the weight of 2g-3g of Al(NO$_3$)$_3$•9H$_2$O and the volume of 50ml-60ml of deionized water to mix and stir until the solution is present clear, and the clear solution is fourth mixture.

Next, take the weight of 1g-2g of NaOH, the weight of 1g-2g of Na$_2$CO$_3$ and the volume of 40ml-60ml deionized water to mix to obtain a fifth mixture.

Then, the fifth mixture is dropped into the fourth mixture until the pH value is 10, so a sixth mixture can be obtained.

Then, the sixth mixture is placed into a 250ml reactor under the temperature is 100°C for 12 hours to react to obtain a seventh mixture. Next, the seventh mixture is washed by deionized water and centrifuged until the pH value is neutral. The seventh mixture is then pulverized to obtain white Zn-Al-LDH powder, in which the diameter of white Zn-Al-LDH powder ranges from 280nm-370nm.

Synthesis of SiO$_2$@ Zn-Al-LDH (Silicon dioxide-inorganic filler)

The weight of 1g-2g of third mixture (SiO$_2$) powder is mixed with the volume of 70ml-80ml of solvent to form an eighth mixture, and is placed in a ultrasonic oscillator for shaking at least 30 minutes until the SiO$_2$ powder is dispersed in the eighth mixture.

The weight of 0.5g-2g of zinc nitrate hexahydrate (Zn(NO$_3$)$_2$•6H$_2$O) and the weight of 0.4g-1g of Aluminum nitrate (Al(NO$_3$)$_3$•9H$_2$O) are added into a volume of 30ml-40ml of deionized water to form a ninth mixture and stir until the ninth mixture is clear.

The weight of 1g-2g of NaOH and the weight of 0.5g-1g of Na$_2$CO$_3$ are added into the volume of 30ml-40ml of deionized water to form a tenth mixture and stir until the tenth mixture is clear.

The ninth mixture is taken to drop into eighth mixture to form an eleventh mixture, and tenth mixture is added into eleventh mixture until the pH value is 10.

Then, the eleventh mixture is placed into a volume of 250ml reactor under the temperature is 100°C for 12 hours to react to form a twelfth mixture. Next, the twelfth mixture is washed by deionized water and then is centrifuged until pH value is neutral. After twelfth mixture is washed and dried, the twelfth mixture is pulverized to obtain white SiO$_2$@Zn-Al-LDH powder.

Preparation of modified nanocompsite material

Take the polymer matrix 28 such as PE (polyethylene), PP (polypropylene), or PET (polyethylene terephthalate) to mix with above twelfth mixture, SiO$_2$@Zn-Al-LDH, and inorganic filler 22, and is performed hot press process with a hot press machine for lamination to form a thin film of a modified nanocomposite material 2. In this embodiment, the condition in the hot press process: temperature is 100°C and pressure is 100kgf/cm$^2$. In addition, in this invention, the preferably polymer matrix 28 is PP. It should be illustrated that the properties of PE, PP, or PET is hydrophobic and is non-polar material, SiO$_2$@Zn-Al-LDH is hydrophilic and polar nanomaterials. A compatibilizer (not shown) is used to bond the polymer matrix 28 and SiO$_2$@Zn-Al-LDH to form the modified nanocomposite material 2, in which the compatibilizer (not shown) can be PE-g-ST, PP-g-ST, ABS-g-MAH, PE-g-MAH or PP-g-MAHA. In a preferably embodiment, the compatibilizer is PP-g-MAHA which has grafting rate is 1%. In addition, the weight ratio of SiO$_2$ to Zn-Al-LDH ranges from 0~10:10~0 of SiO$_2$-inorganic filler (also can be showed as SiO$_2$@inorganic filler). In this embodiment, the inorganic filler is Zn-Al-LDH, and SiO$_2$-inorganic filler can be described as SiO$_2$@Zn-Al-LDH. For example, when the content ranges from 0.5wt%-7wt% of SiO$_2$@Zn-Al-LDH in the modified nanocomposite material 2, the weight ratio of SiO$_2$ to Zn-Al-LDH can be 0:10, 1:9, 2:8... 10:0. In addition, the content of organic modifier 26 ranges from 5wt%-30wt% in modified nanocomposite material 2.

According to above, Zn-Al-LDH is randomly coated on the surface of the SiO$_2$ by using hydrothermal coprecipitation method to achieve the delamination, reaction mechanism is the same as shown in Fig. 2.

Tensile test

In this invention, the thin film of modified nanocomposite material 2 is subjected to a tensile test by using ASTM D638, to obtain the tensile test ranges from 30MPa to 40MPa. That is, the thin film of modified nanocomposite material 2 is capable of material mechanical properties. In addition, the hydroxyl groups on the surface of SiO$_2$ 24 spheres, while Zn-Al-LDH is the presence of hydroxyl group in the laminate. The hydroxyl group can be combined with the compatibilizer to generate hydrogen bond to increase the dispersion.

Accordingly, SiO$_2$@Zn-Al-LDH is surface-functionalized by dispersing within the polymer matrix 28 to form the modified nanocomposite material 2 of this invention. The layered-liked structure of the SiO$_2$@Zn-Al-LDH is destroyed via dispersion of the polymer matrix 28 and intercalated by the organic modifier 26, so the structure or organization of SiO$_2$@Zn-Al-LDH is destroyed. Advantageously, SiO$_2$@Zn-Al-LDH mixed with the polymer matrix 28 and the organic modifier 26 to enhance the mechanical and/or thermal properties of both thermoplastics and thermosetting polymers applicable in encapsulation for food packaging materials, functional fibers, optical film, weather-resistance building materials, engineering plastics.

Experimental 4

Synthesis of silicon dioxide (SiO$_2$)

Take weight of 2g-3g water, weight of 4g-5g of TEOS and the volume of 40ml-50ml of solvent to stir to form a first mixture, in which the solvent can be alcohol, such as ethanol, ethylene glycol, propanol, or isopropanol, the preferably is ethanol. Then, the volume of 7ml-8ml, 15M concentrated NH$_4$OH is added into the first mixture and is kept stirring for 24 hours to obtain a second mixture. Next, the second mixture is washed with deionized water and centrifuged until the smell of NH$_4$OH disappeared. After the smell of NH$_4$OH disappeared, the third mixture can be obtained. The third mixture is freeze-dried and pulverized to obtain the white SiO$_2$ powder, in which the diameter of white SiO$_2$ powder ranges from 200nm-300nm.

Synthesis of Mg-Al-LDH (inorganic filler)

Take weight of 3g-4g of Magnesium nitrate (Mg(NO$_3$)$_2$•6H$_2$O), weight of 2g-3g of Aluminum nitrate (Al(NO$_3$)$_3$•9H$_2$O) and the volume of 20ml-30ml deionized water to mix and stir until the solution is present clear, in which the clear solution is fourth mixture.

Next, take weight of 2g-3g of NaOH and volume of 20ml-30ml of deionized water to mix to obtain a fifth mixture. Then, the fifth mixture is dropped into the fourth mixture to form a sixth mixture until the pH value is 13, so a sixth mixture can be obtained.

Then, the sixth mixture is placed into a 500ml reactor under temperature is 100 °C for 12 hours to obtain a seventh mixture. Next the seventh mixture is washed by deionized water and centrifuged until the pH value of seventh mixture is neutral. The seventh mixture is then pulverized to obtain white Mg-Al-LDH powder, in which the diameter of white Mg-Al-LDH powder ranges from 80nm-130nm.

Synthesis of SiO$_2$@Mg-Al-LDH (Silicon dioxide-inorganic filler)

Take weight of 0.2g-0.5g SiO$_2$ powder (third mixture) to add into volume of 30ml-50ml solvent to form an eighth mixture, and then is placed in an ultrasonic oscillator for 30-40 minutes for shaking, so as SiO$_2$ powder could dispersed over the eighth mixture.

Take weight of 1g-2g of Al(NO$_3$)$_3$•9H$_2$O and weight of 0.5g-1g of Magnesium nitrate hexahydrate (Mg(NO$_3$)$_2$•6H$_2$O) to add into the volume of 20ml-30ml of deionized water to form a ninth mixture, and the ninth mixture is kept for stirring until there is no precipitate over the ninth mixture.

Next, the ninth mixture is added into eighth mixture to form tenth mixture which is kept for stirring for 5-10 minutes, and a concentrated ammonium hydroxide aqueous (NH$_4$OH) is then added to adjust the pH value of tenth mixture is 10. Then, the tenth mixture is added into 500ml reactor under temperature is 100°C for 6 hours to obtain a twelfth mixture. Next, the twelfth mixture is washed by deionized water and centrifuged until the smell of NH$_4$OH is disappeared in the twelfth mixture. After twelfth mixture is freeze-dried and pulverized to obtain the white SiO$_2$@Mg-Al-LDH powder, in which the diameter of white SiO$_2$@Mg-Al-LDH powder ranges from 350nm-400nm.

Preparation of modified nanocomposite material

Take the polymer matrix 28, such as PE, and the appropriate weight of twelfth mixture (white $SiO_2$@Mg-Al-LDH powder) and organic modifier 26 to mix, and perform a hot press process with a hot press machine for lamination to form a thin film of a modified nanocomposite material 2. In this embodiment, the condition in the hot press process: temperature is 100°C and the pressure is 100 kgf/cm². Same as above Experimental 2, the properties of PE is hydrophobic and is non-polar material, $SiO_2$@Mg-Al-LDH powder is hydrophilic and polar nanomaterials. Therefore, a compatibilizer (not shown) is used to bond the polymer matrix 28 and $SiO_2$@Mg-Al LDH powder to form the modified nanocomposite material 2. In this embodiment, the content of compatibilizer may range from 5%-15%, preferably is 10%, and compatibilizer can be PE-g-MA (polyethylene grafted melated anhydride), which has grafted rate is 1%. In addition, the weight ratio of $SiO_2$ to inorganic filler 22 (Mg-Al-LDH) ranges from 0~10:10~0 of $SiO_2$-inorganic filler (can be showed as $SiO_2$@Mg-Al-LDH.) For example, when the content ranges from 0.5wt%-7wt% of $SiO_2$@Mg-Al-LDH in the modified nanocomposite material 2, the weight ratio of $SiO_2$ to Mg-Al-LDH can be 0:10, 1:9, 2:8... 10:0. In this embodiment, the content of organic modifier 26 ranges from 10wt%-20wt% in modified nanocomposite material 2.

According to above, Mg-Al-LDH is randomly coated on the surface of the $SiO_2$ by using hydrothermal coprecipitation method to achieve the delamination, reaction mechanism is the same as shown in Fig. 3.

Tensile test

As same as above Experimental 1, the thin film of modified nanocomposite material is subjected to a tensile test by using ASTM D638, to obtain the tensile test ranges from 20MPa to 25MPa. That is, the thin film of modified nanocomposite material 2 is capable of material mechanical properties. In addition, the hydroxyl groups on the surface of $SiO_2$ 24 spheres, while Mg-Al-LDH is the presence of hydroxyl group in the laminate. The hydroxyl group can be combined with the compatibilizer to generate hydrogen bond to increase the dispersion.

While the invention has been described in terms of what is presently considered to be the most practical and preferred embodiments, it is to be understood that the invention needs not be limited to the disclosed embodiments. On the contrary, it is intended to cover various modifications and similar arrangements included within the spirit and scope of the appended claims which are to be accorded with the broadest interpretation so as to encompass all such modifications and similar structures.

## Claims

1. A modified nanocomposite material (1), the **characterized in that**:

    an inorganic filler (12);
    a silicon dioxide (14), which is provided for binding with a hydroxyl bond of the inorganic filler (12) to form a silicon dioxide-inorganic filler; and
    a polymer matrix (16), which is provided for dispersing over and encapsulating the silicon dioxide-inorganic filler.

2. The modified nanocomposite material (1) according to claim 1, wherein the inorganic filler (12) is Zn-Al-LDH or Mg-Al-LDH.

3. The modified nanocomposite material (1) according to claim 1, wherein the weight ratio of the silicon dioxide (14) to inorganic filler (12) ranges from 0~10:10~0 of the silicon dioxide-inorganic filler.

4. The modified nanocomposite material (1) according to claim 1, wherein the polymer matrix (16) can be PE (polyethylene), PP (polypropylene), or PET (polyethylene terephthalate).

5. The modified nanocomposite material (1) according to claim 1, further comprising a compatibilizer in the modified nanocomposite material, wherein the compatibilizer may include PE-g-ST, PP-g-ST, ABS-g-MAH, PE-g-MAH or PP-g-MAHA.

6. A modified nanocomposite material (2), the **characterized in that**:

    an inorganic filler (22);
    a silicon dioxide (24), which is binding with a hydroxyl bond of the inorganic filler (22) to form a silicon dioxide-inorganic filler;

an organic modifier (26), which is associated with the silicon dioxide-inorganic filler; and
a polymer matrix (28), which is provided for dispersing over and encapsulating the silicon dioxide-inorganic filler and the organic modifier (26).

7.  The modified nanocomposite material (2) according to claim 6, wherein the inorganic filler (22) is Zn-Al-LDH or Mg-Al-LDH.

8.  The modified nanocomposite material (2) according to claim 6, wherein the weight ratio of the silicon dioxide (24) to inorganic filler (22) (ranges from 0~10:10~0 of silicon dioxide-inorganic filler.

9.  The modified nanocomposite material (2) according to claim 6, wherein the chemical formula of the organic modifier (26) may include carbon atom, nitrogen atom, oxygen atom and/or hydrogen atom, and without metal atoms.

10. The modified nanocomposite material (2) according to claim 6, wherein the chemical formula of the organic modifier (26) may include conjugated double bond compound, wherein carbon-carbon double bond (C=C), nitrogen-carbon double bond (N=C), nitrogen-nitrogen double bond (N=N), or carbon-oxygen double bond (C=O), or the combination of above.

11. The modified nanocomposite material (2) according to claim 6, wherein the organic modifier (26) may include straight-chain alkane or ring structure, and the number of carbon atoms of straight-chain alkane may be ranges from 12-18.

12. The modified nanocomposite material (2) according to claim 6, wherein the organic modifier (26) can be sulfanilic acid sodium salt hydrate (SAS), amionpropyltriethyoxysilane (APS), or dimethyloctadecyl [3-(trimethoxysilyl)propyl] ammonium chloride.

13. The modified nanocomposite material (2) according to claim 6, wherein the polymer matrix (28) may be thermosetting macromolecule, thermoplastics polymer or the combination of above.

14. The modified nanocomposite material (2) according to claim 6, wherein the polymer matrix (28) can be PE (polyethylene), PP (polypropylene), or PET (polyethylene terephthalate).

15. The modified nanocomposite material (2) according to claim 6, further comprising a compatibilizer in the modified nanocomposite material, wherein the compatibilizer may include PE-g-ST, PP-g-ST, ABS-g-MAH, PE-g-MAH or PP-g-MAHA.

1

12

16

14

Fig. 1

Al(NO$_3$)$_3$9H$_2$O

Zn(NO$_3$)$_2$6H$_2$O

SiO$_2$

SiO$_2$

SiO$_2$

Zn-Al LDH

Fig. 2

Al(NO$_3$)$_3$9H$_2$O

Mg(NO$_3$)$_2$6H$_2$O

SiO$_2$

SiO$_2$

SiO$_2$

Mg-Al LDH

Fig. 3

Fig. 4

Europäisches
Patentamt

European
Patent Office

Office européen
des brevets

# EUROPEAN SEARCH REPORT

**Application Number**

EP 22 21 3615

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 107 297 195 B (JIANGSU HELPER FUNCTIONAL MAT CO LTD) 8 December 2020 (2020-12-08) * examples * | 1-15 | INV. C08K9/02 C08K9/04 C08L23/06 |
| A | US 2011/048282 A1 (QUIJADA ABARCA RAUL [CL] ET AL) 3 March 2011 (2011-03-03) * claims; examples * | 1-15 | ADD. C08L51/00 C08L51/06 C08K3/36 |
| X | US 2015/322242 A1 (HIROSE TAKAYUKI [JP] ET AL) 12 November 2015 (2015-11-12) * claims; examples * | 1,3,6,8,13 | |
| X | US 2015/376370 A1 (SIDDIQUI MOHAMMAD N [SA] ET AL) 31 December 2015 (2015-12-31) * claim 2; examples * | 1,3,4,6,8,9,13,14 | |
| A | US 2016/347919 A1 (WANG JAMES HONGXUE [CN] ET AL) 1 December 2016 (2016-12-01) * paragraphs [0002] - [0004]; claims * | 1-15 | |
| A | CN 112 007 015 A (UNIV HEILONGJIANG) 1 December 2020 (2020-12-01) * paragraph [0002]; claims; examples * | 1-15 | **TECHNICAL FIELDS SEARCHED (IPC)** C08K C08L C09C |
| X | US 2021/108050 A1 (THITSARTARN WARINTRON [SG] ET AL) 15 April 2021 (2021-04-15) * claims; example 6; table 2 * | 1,3-6,8-10,13-15 | |

The present search report has been drawn up for all claims

| Place of search | Date of completion of the search | Examiner |
|---|---|---|
| Munich | 4 May 2023 | Masson, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 21 3615

04-05-2023

| Patent document cited in search report | | Publication date | Patent family member(s) | | Publication date |
|---|---|---|---|---|---|
| CN 107297195 | B | 08-12-2020 | NONE | | |
| US 2011048282 | A1 | 03-03-2011 | CL | 2012000240 A1 | 09-11-2012 |
| | | | US | 2011048282 A1 | 03-03-2011 |
| | | | WO | 2011011899 A2 | 03-02-2011 |
| US 2015322242 | A1 | 12-11-2015 | NONE | | |
| US 2015376370 | A1 | 31-12-2015 | US | 2015191582 A1 | 09-07-2015 |
| | | | US | 2015376352 A1 | 31-12-2015 |
| | | | US | 2015376370 A1 | 31-12-2015 |
| US 2016347919 | A1 | 01-12-2016 | AU | 2015210797 A1 | 25-08-2016 |
| | | | BR | 112016017565 A2 | 08-08-2017 |
| | | | CN | 105934466 A | 07-09-2016 |
| | | | EP | 3099733 A1 | 07-12-2016 |
| | | | KR | 20160113699 A | 30-09-2016 |
| | | | MX | 367225 B | 08-08-2019 |
| | | | RU | 2016133865 A | 22-02-2018 |
| | | | US | 2016347919 A1 | 01-12-2016 |
| | | | WO | 2015116958 A1 | 06-08-2015 |
| CN 112007015 | A | 01-12-2020 | NONE | | |
| US 2021108050 | A1 | 15-04-2021 | SG | 11201909053S A | 30-10-2019 |
| | | | US | 2021108050 A1 | 15-04-2021 |
| | | | WO | 2018182522 A1 | 04-10-2018 |

EPO FORM P0459